# EUROPEAN PATENT APPLICATION

(11) **EP 4 534 639 A1**
(43) Date of publication of application: **09.04.2025**
(21) Application number: 22944955.8
(22) Date of filing: 19.10.2022
(51) Int. Cl.: C12C 12/00, A23L 2/00, C12G 3/021, C12G 3/04

(54) **BEER-TASTE BEVERAGE**

(30) Priority: 31.05.2022 JP 2022088641
(71) Applicant: Suntory Holdings Limited, Osaka-shi, Osaka 530-8203 (JP)
(72) Inventor: SATOH Yusuke, Tokyo 108-8503 (JP); OKAJIMA Takaho, Fuchu-shi, Tokyo 183-8533 (JP)
(74) Representative: Vossius & Partner Patentanwälte Rechtsanwälte mbB
(86) International application number: PCT/JP2022/038886
(87) International publication number: WO 2023/233680

(57) **Abstract**

A method for producing a beer-taste beverage, comprising a mixing step of mixing a beer-taste stock solution at 3.0°C to 15.0°C and an edible aqueous solution at 3.0°C to 15.0°C.

## Description

### Technical Field

The present invention relates to a method for producing a beer-taste beverage, a method for providing a beer-taste beverage, and a raw material set for producing a beer-taste beverage.

### Background Art

Methods and apparatuses for producing a beer beverage by mixing a malt-based stock solution with carbonated water or the like have been known.

For example, Patent Literature 1 describes a beer beverage production method and a beer beverage dispenser apparatus for producing a malt-based fermented beverage by mixing a malt-based fermented beverage concentrate with a carbonated liquid diluent.

### Citation List

### Patent Literature

Patent Literature 1: WO2018/100071

### Summary of Invention

### Technical Problem

Under such circumstances, for example, there is a demand for novel beer-taste beverages that have a stronger taste suitable for beer.

### Solution to Problem

The present invention provides: a method for producing a beer-taste beverage comprising mixing a beer-taste stock solution in a predetermined temperature range and an edible aqueous solution in a predetermined temperature range; a method for providing a beer-taste beverage; and a raw material set for producing a beer-taste beverage. Specifically, the present invention provides the following embodiments [1] to [8].
[1] A method for producing a beer-taste beverage, comprising a mixing step of mixing a beer-taste stock solution at 3.0°C to 15.0°C and an edible aqueous solution at 3.0°C to 15.0°C.
[2] The production method according to the above [1], which satisfies the following Conditional formula (1): 1.5 ≤ a weight of the edible aqueous solution (g) / a weight of the beer-taste stock solution (g) ≤ 7.0.
[3] The method according to the above [1] or [2], wherein the mixing step is performed in an open container.
[4] The method according to the above [3], wherein the open container has a volume of 3 L or less.
[5] The method according to any one of the above [1] to [4], wherein the edible aqueous solution is an aqueous solution containing carbon dioxide.
[6] A beer-taste beverage produced by the production method according to the above [1].
[7] A method for providing a beer-taste beverage, comprising mixing a beer-taste stock solution at 3.0°C to 15.0°C and an edible aqueous solution at 3.0°C to 15.0°C and providing a mixture thereof.
[8] A raw material set for producing a beer-taste beverage comprising a beer-taste stock solution at 3.0°C to 15.0°C and an edible aqueous solution at 3.0°C to 15.0°C.

### Advantageous Effects of Invention

A beer-taste beverage obtained by the method for producing a beer-taste beverage according to one preferred embodiment of the present invention can be, for example, a beer-taste beverage suitable for beer. In addition, a beer-taste beverage obtained by the method for producing a beer-taste beverage according to one preferred embodiment of the present invention can be, for example, a beverage having a high degree of preference (a degree to which the flavor is perceived as purely delicious). Moreover, a beer-taste beverage obtained by the method for producing a beer-taste beverage according to one preferred embodiment of the present invention can be, for example, a beverage having a clean flavor.

### Description of Embodiments

For the numerical ranges described in the present description, the upper and lower limits can be combined in any desired manner. For example, when a numerical range is described as "preferably 3.0 to 15 and more preferably 3.2 to 13," the range "3.0 to 13" and the range "3.2 to 15" are also included in the numerical range described in the present description. Further, for example, when a numerical range is described as "preferably 30 or more and more preferably 40 or more, or preferably 100 or less and more preferably 80 or less," the range of "30 to 80" and the range of "40 to 100" are also included in the numerical range described in the present description.

Furthermore, as for a numerical range described in the present description, for example, "60 to 100" means a range of "60 or more and 100 or less."

Moreover, in defining the upper and lower limits described in the present description, a numerical range from the lower limit to the upper limit can be defined by appropriately selecting from the respective options and combining them in any way.

Regarding the various features described in the present description as the preferred embodiments, a plurality of them can be combined.

The method for producing a beer-taste beverage according to one embodiment of the present invention includes a mixing step of mixing a beer-taste stock solution and an edible aqueous solution.

### 1. Beer-taste beverage

The beer-taste beverage according to one embodiment of the present invention is produced via a mixing step of mixing a beer-taste stock solution and an edible aqueous solution.

Therefore, the term "beer-taste beverage" in the present description refers to a beverage obtained via a mixing step of mixing a beer-taste stock solution and an edible aqueous solution, which is an alcoholic or non-alcoholic carbonated drink with a beer-like flavor. In other words, unless otherwise specified, the beer-taste beverage in the present description includes any carbonated beverage that has a beer flavor.

### 2. Beer-taste stock solution

The term "beer-taste stock solution" in the present description refers to an edible solution for producing a beer-taste beverage by mixing the stock solution and an edible aqueous solution. The beer-taste stock solution is not particularly limited as long as it is a liquid that is mixed with an edible aqueous solution, thereby allowing a beer-taste beverage to be produced.

The beer-taste stock solution according to one embodiment of the present invention is diluted when mixed with the edible aqueous solution. Therefore, it is preferable that the beer-taste stock solution has an ethanol concentration, a flavor component (ester, higher alcohol, etc.) concentration, an original extract concentration, a color, a bitterness value, and the like higher than those of general beer-taste beverages.

The beer-taste stock solution includes, for example, not only a fermented stock solution obtained by fermenting malts, hops, and water as raw materials using yeast but also a stock solution to which beer flavors containing flavor components such as an ester, a higher alcohol, and lactone have been added. The beer-taste stock solution may also be a carbonated stock solution that contains carbon dioxide or a non-carbonated stock solution that does not contain carbon dioxide.

Examples of the flavor components contained in the beer flavor may include isoamyl acetate, ethyl acetate, n-propanol (1-propanol, etc.), isobutanol, acetaldehyde, ethyl caproate, ethyl caprylate, isoamyl propionate, linalool, geraniol, citral, 4-vinyl guaiacol (4-VG), 4-methyl-3-pentenoic acid, 2-methyl-2-pentenoic acid, 1,4-cineole, 1,8-cineole, 2,3-diethyl-5-methylpyrazine, γ-decanolactone, γ-undecalactone, ethyl hexanoate, ethyl 2-methylbutyrate, ethyl n-butyrate, myrcene, citral, limonene, maltol, ethyl maltol, phenylacetic acid, furaneol, furfural, methional, 3-methyl-2-butene-1-thiol, 3-methyl-2-butanethiol, diacetyl, ferulic acid, geranic acid, geranyl acetate, ethyl butyrate, octanoic acid, decanoic acid, 9-decenoic acid, nonanoic acid, tetradecanoic acid, propanoic acid, 2-methylpropanoic acid, γ-butyrolactone, 2-aminoacetophenone, ethyl 3-phenylpropionate, 2-ethyl-4-hydroxy-5-methyl-3(2H)-furanone, dimethylsulfone, 3-methylcyclopentane-1,2-dione, 2-methylbutanal, 3-methylbutanal, 2-methyltetrahydrofuran-3-one, 2-acetylfuran, 2-methyltetrahydrofuran-3-one, hexanal, hexanol, cis-3-hexenal, 1-octen-3-ol, β-eudesmol, 4-mercapto-4-methylpentan-2-one, β-caryophyllene, β-myrcene, furfuryl alcohol, 2-ethylpyrazine, 2,3-dimethylpyrazine, 2-methylbutyl acetate, isoamyl alcohol, 5-hydroxymethylfurfural, phenylacetaldehyde, 1-phenyl-3-buten-1-one, trans-2-hexenal, nonanal, phenethyl alcohol, nerol, citronellol, methyl p-toluate, 1,2,3,5-tetramethylbenzene, triethyl citrate, tributyl citrate, diethyl tartrate, dibutyl malate, perillaldehyde, methylheptenone, lemon myrtle, and cinnamaldehyde.

Moreover, the beer-taste stock solution according to one embodiment of the present invention may be a fermented beer-taste stock solution produced by performing a fermentation step using yeast or may also be a non-fermented beer-taste stock solution produced without performing such a fermentation step.

The fermented beer-taste stock solution may be either an ale beer-taste stock solution brewed through a fermentation step using a top fermentation yeast (Saccharomyces, etc.), a lager beer-taste stock solution brewed through a fermentation step using a bottom fermentation yeast (Saccharomyces, etc.), or a Pilsner beer-taste stock solution. Furthermore, the "fermentation" referred to in the present description may be alcoholic fermentation, in which alcohol is produced, or non-alcoholic fermentation, in which alcohol is not produced.

In addition, the beer-taste stock solution according to one embodiment of the present invention may be either a beer-taste stock solution comprising a malt, in which a malt is used as a raw material, or a beer-taste stock solution not comprising a malt, in which a malt is not used as a raw material. A beer-taste stock solution comprising a malt is, for example, a beer-taste stock solution comprising a barley malt.

The alcohol percentage (ethanol content (v/v)%) of the beer-taste stock solution according to one embodiment of the present invention is not particularly limited. However, the alcohol percentage may be, for example, 0.0 (v/v)% or more, more than 0.0 (v/v)%, 0.1 (v/v)% or more, 0.3 (v/v)% or more, 0.5 (v/v)% or more, 0.7 (v/v)% or more, 1.0 (v/v)% or more, 2.0 (v/v)% or more, 3.0 (v/v)% or more, 3.5 (v/v)% or more, 4.0 (v/v)% or more, 4.5 (v/v)% or more, 5.0 (v/v)% or more, 5.5 (v/v)% or more, 6.0 (v/v)% or more, 6.5 (v/v)% or more, 7.0 (v/v)% or more, 8.0 (v/v)% or more, or 9.0 (v/v)% or more. From the viewpoint of satisfying quality of a beverage, the alcohol percentage is preferably 10.0 (v/v)% or more, more preferably 10.5 (v/v)% or more, and further preferably 11.0 (v/v)% or more, and may further be 11.5 (v/v)% or more, 12.0 (v/v)% or more, 12.5 (v/v)% or more, 13.0 (v/v)% or more, 13.5 (v/v)% or more, or 14.0 (v/v)% or more, 15.0 (v/v)% or more, 16.0 (v/v)% or more, 17.0 (v/v)% or more, 18.0 (v/v)% or more, 19.0 (v/v)% or more, 20.0 (v/v)% or more, 21.0 (v/v)% or more, 22.0 (v/v)% or more, 23.0 (v/v)% or more, 24.0 (v/v)% or more, or 25.0 (v/v)% or more. In addition, the alcohol percentage of the beer-taste stock solution may also be 50.0 (v/v)% or less, 45.0 (v/v)% or less, 35.0 (v/v)% or less, 30.0 (v/v)% or less, less than 25.0 (v/v)%, 24.0 (v/v)% or less, 23.0 (v/v)% or less, 22.0 (v/v)% or less, 21.0 (v/v)% or less, 20.0 (v/v)% or less, 19.5 (v/v)% or less, 19.0 (v/v)% or less, 18.5 (v/v)% or less, 18.0 (v/v)% or less, 17.5 (v/v)% or less, 17.0 (v/v)% or less, 16.5 (v/v)% or less, 16.0(v/v)% or less, 15.5(v/v)% or less, 15.0(v/v)% or less, 14.5(v/v)% or less, 14.0(v/v)% or less, 13.5(v/v)% or less, 13.0(v/v)% or less, 12.5(v/v)% or less, 12.0(v/v)% or less, 11.5(v/v)% or less, 11.0(v/v)% or less, 10.5(v/v)% or less, 10.0(v/v)% or less, 9.5(v/v)% or less, 9.0(v/v)% or less, 8.5(v/v)% or less, or 8.0(v/v)% or less.

Moreover, the beer-taste beverage of the present invention may be a non-alcoholic beer-taste beverage having an alcohol percentage of less than 1 (v/v)%. The alcohol percentage of a beer-taste stock solution for producing a non-alcoholic beer-taste beverage is set to preferably 0.8 (v/v)% or less, 0.7 (v/v)% or less, 0.6 (v/v)% or less, 0.4 (v/v)% or less, 0.2 (v/v)% or less, or less than 0.1 (v/v)%.

Besides, in the present description, the alcohol percentage is indicated with the percentage (v/v)% of volume/volume basis. In addition, the content of alcohol in a beverage can be measured by all of known methods, and it can be measured, for example, using an oscillatory density meter.

Moreover, the alcohol percentage of the beer-taste stock solution according to one embodiment of the present invention can be adjusted in a desired range by determining, as appropriate, the addition of a diluting solution or carbonated water and the additive amount thereof when added, the types of raw materials (*mugi,* malts, corn grits, a sugar solution, etc.), the amounts of the raw materials, the type of an enzyme, the additive amount of the enzyme, the timing of adding the enzyme, the saccharification time in a preparation tank, the proteolysis time in the preparation tank, the pH in the preparation tank, the pH in a preparation step (a wort-producing step from addition of the malts until addition of the yeast), the additive amount of an acid used upon the pH adjustment, the timing of the pH adjustment (at the time of preparation, during fermentation, at completion of the fermentation, before beer filtration, after beer filtration, etc.), the preset temperature in each temperature range and retention time during preparation of a wort (including during saccharification), the concentration of an original extract in a pre-fermentation solution, the concentration of an original extract in a fermentation step, fermentation conditions (oxygen concentration, aeration conditions, the variety of the yeast, the additive amount of the yeast, the number of proliferating yeast cells, the timing of removing the yeast, fermentation temperature, fermentation time, pressure setting, carbon dioxide concentration, etc.), addition or non-addition of spirits, distilled alcohols and the like and the additive amounts thereof when added, etc.

The beer-taste stock solution according to one embodiment of the present invention may contain a spirit (distilled liquor) derived from grains as an alcohol component in order to adjust the alcohol percentage to fall within the above-described range.

In the present description, the spirits mean alcohols obtained by using, as raw materials, grains such as *mugi,* rice, buckwheat, corn, potatoes, or sugarcane, saccharifying the raw material grains using malts, or as necessary, an enzyme agent, then fermenting the resultants using yeasts, and then, further distilling the fermented products. The grain as a raw material of spirits is preferably a Gramineae plant and more preferably *mugi.*

The beer-taste beverage of one embodiment of the present invention may be a beverage that does not contain spirits from the viewpoint of being a beer-taste beverage suitable for beer having a high-quality flavor.

The ratio of malts in the beer-taste beverage according to one embodiment of the present invention may be 10% by mass or more, 20% by mass or more, 30% by mass or more, 40% by mass or more, 45% by mass or more, 46% by mass or more, 47% by mass or more, 48% by mass or more, 49% by mass or more, 50% by mass or more, 51% by mass or more, 52% by mass or more, 53% by mass or more, 54% by mass or more, 55% by mass or more, 56% by mass or more, 57% by mass or more, 58% by mass or more, 59% by mass or more, 60% by mass or more, 61% by mass or more, 62% by mass or more, 63% by mass or more, 64% by mass or more, 65% by mass or more, 66% by mass or more, more than 66% by mass, 67% by mass or more, 70% by mass or more, 75% by mass or more, 80% by mass or more, 85% by mass or more, 90% by mass or more, 95% by mass or more, or 100% by mass. It may also be 100% by mass or less, less than 100% by mass, 98% by mass or less, 95% by mass or less, 90% by mass or less, 85% by mass or less, 80% by mass or less, 75% by mass or less, 70% by mass or less, 68% by mass or less, 67% by mass or less, less than 67% by mass, 66% by mass or less, 65% by mass or less, 64% by mass or less, 63% by mass or less, 62% by mass or less, 61% by mass or less, 60% by mass or less, 59% by mass or less, 50% by mass or less, or less than 50% by mass.

In the present description, the percentage of the malts means a value calculated in accordance with the Notification of the Interpretation of the Liquor Tax Law and Other Laws and Orders relating to the Administration of Liquor Affairs (date of enforcement: April 1, 2018).

When the ratio of the malts is suppressed, it is preferable to increase the amounts of raw materials other than the malts, which can be assimilated by yeasts (i.e., a carbon source and a nitrogen source). Examples of the carbon source as a raw material, which can be assimilated by yeasts, may include monosaccharide, disaccharide, trisaccharide, and sugar solutions thereof. Examples of the nitrogen source as a raw material, which can be assimilated by yeasts, may include yeast extracts, soybean proteins, malts, soybeans, yeast extracts, peas, wheat malts, ungerminated grains, and decomposition products thereof. Examples of the ungerminated grains may include ungerminated barley, wheat, rye, wild oats, oats, adlay, Avena sativa, rice (white rice, brown rice, etc.), corn, corn, potatoes, beans (soybeans, peas, etc.), buckwheat, sorghum, millet, and barnyard millet. In addition, starches obtained from these grains and extracts thereof may also be used.

The original extract (O-Ex) concentration of the beer-taste stock solution according to one embodiment of the present invention may be 6.0% by mass or more, 6.5% by mass or more, 7.0% by mass or more, 7.5% by mass or more, 8.0% by mass or more, 8.5% by mass or more, 9.0% by mass or more, 10.0% by mass or more, 11.0% by mass or more, 12.0% by mass or more, 13.0% by mass or more, 14.0% by mass or more, 15.0% by mass or more, 16.0% by mass or more, 17.0% by mass or more, 18.0% by mass or more, 19.0% by mass or more, 20.0% by mass or more, 21.0% by mass or more, 22.0% by mass or more, 23.0% by mass or more, 24.0% by mass or more, 25.0% by mass or more, or 26.0% by mass or more, It may also be 50.0% by mass or less, 45.0% by mass or less, 40.0% by mass or less, 35.0% by mass or less, 30.0% by mass or less, 29.0% by mass or less, 28.0% by mass or less, 27.0% by mass or less, 26.0% by mass or less, 25.0% by mass or less, 24.0% by mass or less, 23.0% by mass or less, 22.0% by mass or less, 21.0% by mass or less, 20.0% by mass or less, 18.0% by mass or less, 16.0% by mass or less, 15.0% by mass or less, or 13.5% by mass or less.

The "original extract concentration" in the present description means, in the case of an alcohol-containing stock solution having an alcohol percentage of 1 (v/v)% or more, an extracted component according to the Japanese Liquor Tax Law, namely, nonvolatile components in grams contained in 100 cm³ of an original volume at a temperature of 15°C. On the other hand, in the case of a non-alcoholic stock solution having an alcohol percentage of less than 1 (v/v)%, the original wort extract concentration means an extract value (% by mass) that is obtained by measuring a degassed sample according to an analysis method defined by Brewers Association of Japan, Brewery Convention of Japan (BCOJ) (BCOJ Beer Analysis Method (published by the Brewing Society of Japan, edited by Brewers Association of Japan, revised and expanded in 2013)).

The pH of the beer-taste stock solution according to one embodiment of the present invention is preferably 2.0 or more, 2.2 or more, 2.4 or more, 2.6 or more, 2.8 or more, 3.0 or more, 3.1 or more, 3.2 or more, 3.3 or more, 3.4 or more, 3.5 or more, 3.6 or more, 3.7 or more, 3.8 or more, 3.9 or more, or 4.0 or more. On the other hand, it is preferably 5.4 or less, 5.2 or less, 5.0 or less, 4.9 or less, 4.8 or less, 4.7 or less, 4.6 or less, 4.55 or less, or 4.5 or less. It may also be 4.0 or less or less than 4.0.

The beer-taste stock solution according to one embodiment of the present invention may be in the form of a container. Examples of the container may include a barrel, a bottle, a plastic bottle, or a can.

### 2. 1 Raw materials

As the main raw materials for the beer-taste stock solution according to one embodiment of the present invention, malts may be used together with water, or malts may not be used. Furthermore, the beer-taste stock solution according to one embodiment of the present invention may be a beverage that uses hops as an ingredient or a beverage that does not use hops.

Other than these raw materials, a preservative, a sweetener, water-soluble dietary fibers, a bittering agent or a bitterness-imparting agent, an antioxidant, a flavor, an acidulant, a salt, and the like may also be used.

### 2. 1. 1 Malts and grains other than malts

When malts are used as raw materials, the malts mean those obtained by germinating the seeds of *mugi* plants such as barley, wheat, rye, wild oats, oats, adlay, or *Avena sativa,* then drying them, and then removing roots. The production area and variety of the used malts are not particularly limited.

In one embodiment of the present invention, the used malts are preferably barley malts. The barley malts are one type of malts that are most commonly used as raw materials of beer-taste beverages in Japan. Barley has several types such as two-row barley and six-row barley. All types of barley may be used. Further, in addition to common malts, colored malts and the like can also be used. When such colored malts are used, different types of colored malts may be appropriately used in combination, or only one type of colored malts may also be used.

The malts used in one embodiment of the present invention have a modification of preferably 80% or more. When the modification is less than 80%, the viscosity and turbidity of the wort may increase, resulting in poor production efficiency, such as wort filterability and beer filterability. Therefore, it is preferable to use malts with a modification of 80% or more. In the Examples and Comparative Examples described below, malts with a modification of 80% or more were used. The modification can be measured by the method described in MEBAK Raw Materials Barley Adjuncts Malt Hops And Hop Products Published by the Chairman Dr. Fritz Jacob Self-published by MEBAK 85350 Freising-Weihenstephan, Germany 2011, 3.1.3.8 Modification and Homogeneity (Calcofluor Carlsberg Method-EBC).

In the beer-taste beverage according to one embodiment of the present invention, the malts used are preferably selected appropriately depending on the desired chromaticity of the beer-taste beverage, and the malt selected may be a single type, or two or more types may be selected in combination.

Moreover, together with or instead of such malts, grains other than the malts may also be used.

Examples of such grains may include *mugi* that does not correspond to malts (e.g., barley, wheat, rye, wild oats, oats, adlay, Avena sativa, etc.), rice (e.g., white rice, brown rice, etc.), corns, kaoliangs, potatoes, beans (e.g., soybeans, garden peas, etc.), buckwheat, sorghum, foxtail millet, barnyard millet, starches obtained from these grains, and extracts thereof.

When the ratio of the malts is suppressed, or malts are not used, it is preferable to increase the amounts of raw materials other than the malts, which can be assimilated by yeasts (i.e., a carbon source and a nitrogen source). Examples of the carbon source as a raw material, which can be assimilated by yeasts, may include monosaccharide, disaccharide, trisaccharide, and sugar solutions thereof. Examples of the nitrogen source may include yeast extracts, amino acid-containing materials (e.g., soy proteins, etc.), soybeans, yeast extracts, peas, wheat malts, ungerminated grains, and decomposition products thereof.

The fruits, fruit skins, bark, leaves, flowers, stems, roots, and seeds of plants other than Gramineae plants such as *mugi* that can be used as raw materials can be appropriately selected.

Specific examples of plants other than Gramineae plants may include citrus fruits, soft fruits, herbs, and spices. Examples of citrus fruits may include oranges, *yuzu* (*Citrus junos*)*,* lemons, limes, mandarins, grapefruits, *iyokan* (*Citrus iyo*)*,* kumquats, *kabosu* (*Citrus sphaerocarpa*), *daidai* (*Citrus aurantium*), *shekwasha* (*Citrus depressa*), and *sudachi* (*Citrus sudachi*)*.*

These may be used as they are, or may be crushed before use, or may be used in the form of an extract extracted with an extraction solvent such as water or ethanol, or may be used in the form of squeezed juice (such as fruit juice). These may be used alone, or may also be used in combination of two or more types.

The above ingredients can be used as appropriate according to consumer preferences, but in order to enjoy the clean and refreshing flavor that is characteristic of beer, it is preferable to not use any of the above citrus fruits, soft fruits, herbs, and spices as ingredients, or to use them in the minimum amount possible. In particular, blackcurrants impart an undesirable milky aroma to beer. Therefore, it is preferable not to use blackcurrants or blackcurrant juice as ingredients at all or to use only the minimum amount possible.

### 2. 1. 2 Hops

When hops are used in one embodiment of the present invention, examples of the forms of hops may include pelletized hops, powdered hops, and hop extracts. In addition, the used hops may also be hop-processed products such as isomerized hops and reduced hops.

In the case of using such hops in one embodiment of the present invention, the additive amount of hops is appropriately adjusted but is preferably 0.0001% to 1% by mass with respect to the total amount (100% by mass) of the raw materials for the beverage.

Moreover, a beer-taste beverage comprising hops as raw materials becomes a beverage containing an iso-alpha acid that is a component derived from the hops. The content of the iso-alpha acid in the beer-taste beverage comprising hops may be more than 0.1 ppm by mass, and may also be more than 1.0 ppm by mass, based on the total amount (100% by mass) of the beer-taste beverage.

On the other hand, the content of the iso-alpha acid in a beer-taste beverage that does not comprise hops may be 0.1 ppm by mass or less, based on the total amount (100% by mass) of the beer-taste beverage.

Besides, in the present description, the content of the iso-alpha acid means a value measured according to a high performance liquid chromatography (HPLC) analysis method described in "Revised Version Brewery Convention of Japan (BCOJ) Beer Analysis Method (published by the Brewing Society of Japan, edited by Brewers Association of Japan, Brewery Convention of Japan [Analysis Committee], and enlarged and revised in 2013)."

### 2. 1. 3 Additives

The beer-taste beverage according to one embodiment of the present invention may comprise various additives, as necessary, to such an extent that the additives do not impair the effects of the present invention.

Examples of such additives may include preservatives, sweeteners, bittering agents, bitterness imparting agents, antioxidants, flavors, acidulants, salts, coloring agents, foaming agents, fermentation promoters, yeast extracts, protein substances such as peptide-containing matters, and condiments such as amino acids.

### 2. 2 Carbon dioxide gas

Carbon dioxide gas may or may not be dissolved in the beer-taste stock solution according to one embodiment of the present invention.

As carbon dioxide gas contained in the beer-taste stock solution, carbon dioxide gas contained in the raw materials may be utilized, or carbon dioxide gas may be dissolved in the beverage by the mixing of the beverage with carbonated water, addition of carbon dioxide gas to the beverage, and the like.

### 2. 3. Method for producing beer-taste stock solution

The method for producing a beer-taste stock solution according to one embodiment of the present invention is not particularly limited, and production can be carried out in a manner similar to that for ordinary beer-taste beverages. The method for producing a beer-taste stock solution according to one embodiment of the present invention may be a production method with or without a fermentation step.

### 3. Edible aqueous solution

The term "edible aqueous solution" in the present description refers to a solution in which one or more edible components are dissolved in water. The edible component is not particularly limited and may be a solid, a liquid such as vegetable oil, or a gas such as carbon dioxide gas.

The edible aqueous solution to be mixed with the beer-taste stock solution according to the present invention is not particularly limited and may be an effervescing aqueous solution such as cider, *ramune* (Japanese carbonated soft drink), coke, or carbonated water, or a non-effervescing aqueous solution such as soft drinks, tea, or black tea. Effervescing aqueous solutions are preferable, aqueous solutions containing carbon dioxide are more preferable, carbonated drinks are further preferable, and carbonated water is particularly preferable.

The concentration of the carbon dioxide gas in the edible aqueous solution of the present invention may be preferably 0.30 (w/w)% or more, more preferably 0.35 (w/w)% or more, further preferably 0.40 (w/w)% or more, still further preferably 0.42 (w/w)% or more, and particularly preferably 0.45 (w/w)% or more. On the other hand, it may also be preferably 0.90 (w/w)% or less, 0.80 (w/w)% or less, 0.70 (w/w)% or less, 0.6 (w/w)% or less, or 0.55 (w/w)% or less.

Besides, in the present description, the concentration of carbon dioxide gas can be measured by immersing a container, in which a beverage used as a target is placed, in a water tank at 20°C for 30 minutes or more, while sometimes shaking the container, so that the temperature of the beverage is adjusted to be 20°C, and then measuring the concentration using a gas volume measuring device (for example, GVA-500 (manufactured by KYOTO ELECTRONICS MANUFACTURING CO., LTD.), etc.).

When the edible aqueous solution according to one embodiment of the present invention is container-packed, the carbon dioxide gas pressure thereof may be adjusted, as appropriate, in a range in which the concentration of the carbon dioxide gas becomes in the above-described concentration range. The carbon dioxide gas pressure of the beverage may be 5.0 kg/cm² or less, 4.5 kg/cm² or less, or 4.0 kg/cm² or less, and 0.20 kg/cm² or more, 0.50 kg/cm² or more, or 1.0 kg/cm² or more. Besides, these upper limits and lower limits may be combined with one another in any way, and for example, the carbon dioxide gas pressure may be 0.20 kg/cm² or more and 5.0 kg/cm² or less, 0.50 kg/cm² or more and 4.5 kg/cm² or less, or 1.0 kg/cm² or more and 4.0 kg/cm² or less.

In the present description, the gas pressure means a gas pressure in a container, unless otherwise specified.

The pressure can be measured by a method well known to those skilled in the art, and for example, the pressure can be measured by applying a method comprising fixing a sample set at 20°C in a gas pressure gauge, then once opening the stopper cock of the gas pressure gauge to discharge gas, then closing the stopper cock again, then shaking the gas pressure gauge, and then reading the value when the indicator reaches a predetermined position, or by using a commercially available gas pressure measurement device.

### 4. Method for producing beer-taste beverage

The method for producing a beer-taste beverage according to one embodiment of the present invention includes a mixing step of mixing a beer-taste stock solution and an edible aqueous solution.

The production method according to one embodiment of the present invention can provide a beer having excellent degree of preference, flavor, and taste suitable for beer, and the like by controlling the temperatures of a stock solution and an edible aqueous solution within specific ranges. In addition, since the mixing step of the production method of the present invention can be carried out at restaurants and homes, freshly made beer-taste beverages can be provided.

The method for producing a beer-taste beverage according to one embodiment of the present invention includes a mixing step of mixing a beer-taste stock solution at 3.0°C to 15.0°C and an edible aqueous solution at 3.0°C to 15.0°C.

When the temperature of the beer-taste stock solution is less than 3.0°C, the degree of preference for the obtained beer-taste beverage decreases, causing the sensation of a taste suitable for beer to be weakened. Therefore, the temperature of the beer-taste stock solution is 3.0°C or more, which may be 3.2°C or more, 3.4°C or more, 3.6°C or more, 3.8°C or more, 4.0°C or more, 4.2°C or more, 4.4°C or more, 4.6°C or more, 4.8°C or more, 5.0°C or more, 5.2°C or more, 5.4°C or more, 5.6°C or more, 5.8°C or more, 6.0°C or more, 6.5°C or more, 7.0°C or more, 7.5°C or more, or 8.0°C or more.

When the temperature of the beer-taste stock solution is more than 15.0°C, the degree of preference for the obtained beer-taste beverage decreases, causing the sensation of a clean flavor or a taste suitable for beer to be weakened. Therefore, the temperature of the beer-taste stock solution is 15.0°C or less. From the viewpoint of producing a beer-taste beverage having a degree of preference, a clean flavor, and a taste suitable for beer which are improved in a well-balanced manner, the temperature is preferably 13.0°C or less, more preferably11.0°C or less, further preferably 9.0°C or less, still further preferably 7.0°C or less, still further preferably 6.0°C or less, and particularly preferably 5.0°C or less, which may be 4.8°C or less, 4.6°C or less, 4.4°C or less, 4.2°C or less, 4.0°C or less, 3.8°C or less, 3.6°C or less, 3.4°C or less, 3.2°C or less, 3.0°C or less, 2.8°C or less, 2.6°C or less, 2.4°C or less, 2.2°C or less, or 2.0°C or less.

In addition the temperature of the edible aqueous solution is less than 3.0°C, the degree of preference for the obtained beer-taste beverage decreases, causing the sensation of a taste suitable for beer to be weakened. Therefore, the temperature of the edible aqueous solution is 3.0°C or more, which may be 3.2°C or more, 3.4°C or more, 3.6°C or more, 3.8°C or more, 4.0°C or more, 4.2°C or more, 4.4°C or more, 4.6°C or more, 4.8°C or more, 5.0°C or more, 5.2°C or more, 5.4°C or more, 5.6°C or more, 5.8°C or more, 6.0°C or more, 6.5°C or more, 7.0°C or more, 7.5°C or more, or 8.0°C or more.

When the temperature of the edible aqueous solution is more than 15.0°C, the degree of preference for the obtained beer-taste beverage decreases, causing the sensation of a clean flavor or a taste suitable for beer to be weakened. Therefore, the temperature of the beer-taste stock solution is 15.0°C or less. From the viewpoint of producing a beer-taste beverage having a degree of preference, a clean flavor, and a taste suitable for beer which are improved in a well-balanced manner, the temperature is preferably 13.0°C or less, more preferably 11.0°C or less, further preferably 9.0°C or less, still further preferably 8.0°C or less, still further preferably 7.5°C or less, still further preferably 7.0°C or less, still further preferably 6.5°C or less, still further preferably 6.0°C or less, still further preferably 5.5°C or less, particularly preferably 5.0°C or less, which may be 4.8°C or less, 4.6°C or less, 4.4°C or less, 4.2°C or less, 4.0°C or less, 3.8°C or less, 3.6°C or less, 3.4°C or less, 3.2°C or less, 3.0°C or less, 2.8°C or less, 2.6°C or less, 2.4°C or less, 2.2°C or less, or 2.0°C or less.

From the viewpoint of producing a beer-taste beverage having a degree of preference, a clean flavor, and a taste suitable for beer which are improved in a well-balanced manner, the difference (|(tA) - (tB)|) between the temperature of the beer-taste stock solution (tA) and the temperature of the edible aqueous solution (tB) is preferably 7.0°C or less, more preferably 5.0°C or less, further preferably 4.0°C or less, still further preferably 3.0°C or less, still further preferably 2.0°C or less, and particularly preferably 1.0°C or less.

The ratio by weight of the edible aqueous solution to the weight of the beer-taste stock solution (mixing ratio) in the present description can be calculated by the following conditional formula (1). Weight of edible aqueous solution (g) / Weight of beer-taste stock solution (g)

As the mixing ratio decreases, the concentration of the components in the beer-taste stock solution increases, increasing the degree of preference and causing the sensation of the taste suitable for beer to be enhanced. Therefore, the mixing ratio is preferably less than 7.0, more preferably 6.5 or less, and further preferably 6.0 or less, which may be 5.5 or less, 5.0 or less, 4.5 or less, 4.0 or less, 3.5 or less, 3.0 or less, 2.5 or less, or 2.0 or less.

As the mixing ratio increases, the concentration of the components in the beer-taste stock solution decreases, increasing the degree of preference and causing the sensation of the clean flavor to be enhanced. Therefore, the mixing ratio is preferably 1.5 or more, more preferably 1.7 or more, and further preferably 2.0 or more, which may be 2.2 or more, 2.4 or more, 2.6 or more, 2.8 or more, 3.0 or more, 3.2 or more, 3.4 or more, 3.6 or more, 3.8 or more, 4.0 or more, 4.2 or more, 4.4 or more, 4.6 or more, 4.8 or more, 5.0 or more, 5.2 or more, 5.4 or more, 5.6 or more, 5.8 or more, or 6.0 or more.

In the method for producing a beer-taste beverage, the container in which the mixing step is carried out is not particularly limited, but when carried out in a restaurant or the like, an open container is preferable from the standpoint of ease of implementation. Examples of the open container include a glass, a mug, and a cup.

The volume of the container is not particularly limited, but from the viewpoint of ease of implementation when the mixing step is carried out in restaurants and the like, it is preferably 3.0 L or less, which may be 2.8 L or less, 2.5 L or less, 2.0 L or less, 1.5 L or less, 1.0 L or less, 0.8 L or less, 0.6 L or less, 0.4 L or less, 0.3 L or less, 0.2 L or less, or 0.1 L or less.

The temperature of the container in which the mixing step is carried out in the method for producing a beer-taste beverage is not particularly limited. However, it is preferable to minimize the impacts on the temperatures of the beer-taste stock solution and the edible aqueous solution. The temperature of the container may be, for example, 25°C or less, 22°C or less, 20°C or less, 18°C°C or less, 15°C or less, 14°C or less, 13°C or less, 12°C or less, 11°C or less, 10°C or less, 9°C or less, 8°C or less, 7°C or less, 6°C or less, 5°C or less, 4°C or less, 3°C or less, 2°C or less, 1°C or less, or 0°C or less.

In the method for producing a beer-taste beverage, ice may be added in advance to the container in which the mixing step is carried out, or ice may be added to the beer-taste beverage after the mixing step.

The beer-taste beverage obtained by the production method of the present invention may be a beer.

In the present description, the "beer" is a beverage obtained by using malts, hops and water as raw materials and fermenting these raw materials using yeasts. Specifically, the beer means beverages defined by the Notification of the Interpretation of the Liquor Tax Law and Other Laws and Orders relating to the Administration of Liquor Affairs (date of enforcement: April 1, 2018).

In addition, the color of the beer-taste beverage obtained by the method of the present invention is not particularly limited. The beer-taste beverage according to one embodiment of the present invention may have an amber or golden color, such as those of common beer, or may have a black color such as that of black beer, or may also be colorless and transparent. Otherwise, a desired color may be imparted to the beer-taste beverage by adding a coloring agent or the like thereto. The color of the beverage can be determined with the unaided eye, but it may also be determined using total light transmittance, chromaticity, etc.

### 5. Method for providing a beer-taste beverage

In the method for providing a beer-taste beverage according to one embodiment of the present invention, a beer-taste stock solution and an edible aqueous solution are mixed, thereby providing a beer-taste beverage. The method for providing a beer-taste beverage is carried out preferably in restaurants and the like.

In the method for providing a beer-taste beverage according to one embodiment of the present invention, the temperatures of the beer-taste stock solution and the edible aqueous solution, the mixing ratio therebetween, the container therefor, and the like are the same as those in the method for producing a beer-taste beverage.

### 6. Raw material set for producing a beer-taste beverage

The raw material set for producing a beer-taste beverage according to one embodiment of the present invention includes the beer-taste stock solution and the edible aqueous solution. The raw material set for producing a beer-taste beverage may further include a container, ice, and the like.

In the raw material set for producing a beer-taste beverage according to one embodiment of the present invention, the temperatures of the beer-taste stock solution and the edible aqueous solution, the mixing ratio therebetween, the container therefor, and the like are the same as those in the method for producing a beer-taste beverage.

### Examples

Hereinafter, the present invention will be described in more detail in the following examples, etc. However, these examples are not intended to limit the scope of the present invention.

### < Preparation of beer-taste stock solution >

Pulverized barley malts were added into a preparation tank filled with 120 L of hot water, and the temperature was gradually increased and was then retained. The mixture was filtrated to remove malt lees and the like. After the filtration, the obtained raw material solution and hops were added into a boiling tank, and a sugar solution was then added thereto to achieve a predetermined percentage of malt. The volume of the mixed solution was adjusted to 100 L with hot water, so as to obtain a hot wort. The obtained hot wort was cooled, and ventilation was then carried out using oxygen, so as to obtain 60 L of a pre-fermentation solution before addition of a yeast.

A beer yeast (top fermentation yeast) was added to the thus obtained pre-fermentation solution, and fermentation was then carried out for about 1 week. Thereafter, a maturation period was passed further for about 1 week, and the yeast was then removed by filtration. An extract-adjusting water was added to the resulting solution to prepare a beer-taste stock solution.

The prepared beer-taste stock solution had an alcohol concentration of 16 (v/v)%, an original extract concentration of 28 mass%, and a pH of 4.4.

### < Preparation of beer-taste beverage >

The obtained beer-taste stock solution was mixed with carbonated water (carbon dioxide gas concentration: 0.83 (w/w)%), which is an edible aqueous solution, to prepare a beer-taste beverage. The temperatures of the beer-taste stock solution and carbonated water and their mixing ratio [weight (g) of carbonated water/weight (g) of beer-taste stock solution] were adjusted as shown in Table 1.

### < Sensory evaluation >

For the sensory evaluation of the beer-taste beverages, the subject beverages were poured into 0.480-L open glass containers and evaluated.

The same 6 panelists tasted the obtained beer-taste beverages and evaluated as follows.

Individual panelists tasted the beer-taste beverages. Thereafter, with regard to the evaluation items, which are the "degree of preference," "clean taste," and "taste suitable for beer," evaluation was carried out based on the following score criteria, with scores in 1.0 steps in the range of 7.0 (maximum value) to 1.0 (minimum value), and the mean value of the scores given by the 6 panelists was then calculated.

For the evaluation, samples with the evaluation items corresponded to the following criteria "1.0," "2.0," "3.0," "4.0," "5.0," "6.0," and "7.0" had previously been prepared, and thus, the standards among individual panelists were intended to be unified. Moreover, in all of the sensory evaluations in the Examples and Comparative Examples, a score value difference of 2.0 or more was not found among individual panelists, with respect to an identical beverage.

### [Degree of preference]

- "7.0": Extremely delicious
- "6.0": Delicious
- "5.0": Moderately delicious / Relatively delicious
- "4.0": Neither delicious nor not delicious
- "3.0": Relatively not delicious
- "2.0": Not delicious
- "1.0": Extremely not delicious

### [Clean flavor]

- "7.0": Clearly felt
- "6.0": Felt
- "5.0": Relatively felt
- "4.0": Neither felt nor not felt
- "3.0": Relatively felt
- "2.0": Not felt
- "1.0": Clearly not felt

### [Taste suitable for beer]

- "7.0": Clearly felt
- "6.0": Felt
- "5.0": Relatively felt
- "4.0": Neither felt nor not felt
- "3.0": Relatively felt
- "2.0": Not felt
- "1.0": Clearly not felt

A score of 3.8 or higher for the "degree of preference," "clean flavor," and "taste suitable for beer" was considered favorable. Beverages that had scores of 3.8 or higher for the "degree of preference," "clean flavor," and "taste suitable for beer" were judged to pass, and other beverages were judged to fail.

### [Table 1]

**Table 1**

| | Comp. Ex. 1 | Ex. 1 | Comp. Ex. 2 | Comp. Ex. 3 | Ex. 2 | Comp. Ex. 4 | Comp. Ex. 5 | Ex. 3 | Ex. 4 | Ex. 5 | Comp. Ex. 6 |
|---|---|---|---|---|---|---|---|---|---|---|---|
| Temperature of beer-taste stock solution (° C) | 2 | 5 | 20 | 2 | 5 | 20 | 2 | 3 | 4 | 5 | 20 |
| Temperature of carbonated water (° C) | 2 | 5 | 20 | 2 | 5 | 20 | 2 | 3 | 4 | 5 | 20 |
| Mixing ratio | 6 | 6 | 6 | 4 | 4 | 4 | 3 | 3 | 3 | 3 | 3 |
| Degree of preference | 3.2 | 4 | 1 | 4.2 | 5 | 1 | 3.7 | 4.5 | 5.5 | 7 | 1.2 |
| Clean flavor | 6 | 6 | 1.7 | 6 | 6 | 1.7 | 6.8 | 6.8 | 7 | 7 | 1.8 |
| Taste suitable for beer | 1.3 | 3.8 | 1.8 | 2.3 | 5 | 2.7 | 3.8 | 4.7 | 5.7 | 7 | 3.3 |

| | Comp. Ex. 7 | Ex. 6 | Ex. 7 | Ex. 8 | Comp. Ex. 8 | Comp. Ex. 9 | Ex. 9 | Ex. 10 | Ex. 11 | Comp. Ex. 10 |
|---|---|---|---|---|---|---|---|---|---|---|
| Temperature of beer-taste stock solution (° C) | 2 | 3 | 4 | 5 | 20 | 2 | 3 | 4 | 5 | 20 |
| Temperature of carbonated water (° C) | 2 | 3 | 4 | 5 | 20 | 2 | 3 | 4 | 5 | 20 |
| Mixing ratio | 2.7 | 2.7 | 2.7 | 2.7 | 2.7 | 2.5 | 2.5 | 2.5 | 2.5 | 2.5 |
| Degree of preference | 3.5 | 4.3 | 5.7 | 7 | 1.2 | 3.5 | 4.5 | 5.3 | 7 | 1.2 |
| Clean flavor | 6.8 | 6.8 | 7 | 7 | 1.7 | 6.8 | 7 | 7 | 7 | 1.7 |
| Taste suitable for beer | 3.7 | 4.5 | 5.7 | 7 | 3.2 | 3.2 | 4.3 | 5.7 | 7 | 3.2 |

| | Comp. Ex. 11 | Ex. 12 | Ex. 13 | Ex. 14 | Comp. Ex. 12 | Comp. Ex. 13 | Ex. 15 | Comp. Ex. 15 |
|---|---|---|---|---|---|---|---|---|
| Temperature of beer-taste stock solution (° C) | 2 | 3 | 4 | 5 | 20 | 2 | 5 | 20 |
| Temperature of carbonated water (° C) | 2 | 3 | 4 | 5 | 20 | 2 | 5 | 20 |
| Mixing ratio | 2.3 | 2.3 | 2.3 | 2.3 | 2.3 | 2 | 2 | 2 |
| Degree of preference | 3.5 | 4.5 | 5.3 | 7 | 1.2 | 2.3 | 5.2 | 1.2 |
| Clean flavor | 6.8 | 7 | 7 | 7 | 1.7 | 5.8 | 6 | 1 |
| Taste suitable for beer | 3.2 | 4.3 | 5.7 | 7 | 3.2 | 3.2 | 7 | 3.5 |

As can be seen from Table 1, the beverages prepared in Examples 1 to 15 were highly rated in terms of the degree of preference, clean flavor, and taste suitable for beer. On the other hand, none of Comparative Examples 1 to 15 were highly rated in terms of one or more of the degree of preference, clean flavor, and taste suitable for beer.

The beverages of Comparative Examples 1, 3, 5, 7, 9, 11, and 13, which used a 2.0°C beer-taste stock solution and 2.0°C carbonated water, were rated as having a clean flavor, but all of them received poor ratings in terms of the degree of preference, and some beverages received poor ratings in terms of the taste suitable for beer. Thus, it was found that when the stock solution and carbonated water are excessively cold, it can have a negative impact on the degree of preference and the taste suitable for beer.

Further, Comparative Examples 2, 4, 6, 8, 10, 12, and 15, which used a 20.0°C beer-taste stock solution and 20.0°C carbonated water, did not receive high ratings in terms of any of the degree of preference, the clean flavor, and the taste suitable for beer.

## Claims

1. A method for producing a beer-taste beverage, comprising a mixing step of mixing a beer-taste stock solution at 3.0°C to 15.0°C and an edible aqueous solution at 3.0°C to 15.0°C.

2. The production method according to claim 1, which satisfies the following Conditional formula (1): 1.5 ≤ a weight of the edible aqueous solution (g) / a weight of the beer-taste stock solution (g) ≤ 7.0.

3. The method according to claim 1, wherein the mixing step is performed in an open container.

4. The method according to claim 3, wherein the open container has a volume of 3 L or less.

5. The method according to any one of claims 1 to 4, wherein the edible aqueous solution is an aqueous solution containing carbon dioxide.

6. A beer-taste beverage produced by the production method according to claim 1.

7. A method for providing a beer-taste beverage, comprising mixing a beer-taste stock solution at 3.0°C to 15.0°C and an edible aqueous solution at 3.0°C to 15.0°C and providing a mixture thereof.

8. A raw material set for producing a beer-taste beverage comprising a beer-taste stock solution at 3.0°C to 15.0°C and an edible aqueous solution at 3.0°C to 15.0°C.
